(19) Europäisches Patentamt / European Patent Office / Office européen des brevets

(11) **EP 2 132 528 B1**

(12) **EUROPÄISCHE PATENTSCHRIFT**

(45) Veröffentlichungstag und Bekanntmachung des Hinweises auf die Patenterteilung:
**24.06.2015 Patentblatt 2015/26**

(21) Anmeldenummer: **08718118.6**

(22) Anmeldetag: **20.03.2008**

(51) Int Cl.:
*G01C 19/56* (2012.01)   *G01C 19/5712* (2012.01)
*G01C 19/5762* (2012.01)

(86) Internationale Anmeldenummer:
**PCT/EP2008/053409**

(87) Internationale Veröffentlichungsnummer:
**WO 2008/122502 (16.10.2008 Gazette 2008/42)**

(54) **MIKROMECHANISCHER INERTIALSENSOR ZUR MESSUNG VON DREHRATEN**

MICROMECHANICAL INERTIAL SENSOR FOR MEASURING ROTATION RATES

CAPTEUR MICROMÉCANIQUE INERTIEL POUR MESURER DES TAUX DE ROTATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.04.2007 DE 102007017209**

(43) Veröffentlichungstag der Anmeldung:
**16.12.2009 Patentblatt 2009/51**

(60) Teilanmeldung:
**15165766.5**

(73) Patentinhaber: **Fraunhofer-Gesellschaft zur Förderung der angewandten Forschung e.V.
80686 München (DE)**

(72) Erfinder:
• **MERZ, Peter**
  **25557 Beldorf (DE)**
• **WEISS, Manfred**
  **25524 Itzehoe (DE)**

(74) Vertreter: **Olgemöller, Luitgard Maria et al
Patentanwältin
Lindenstraße 12a
81545 München (DE)**

(56) Entgegenhaltungen:
**EP-B- 0 906 557   US-A- 5 955 668**

**Beschreibung**

Die vorliegende Erfindung betrifft einen in einer x-y-Ebene angeregten Vibrations-Drehratensensor, welcher eine außenliegende Verankerung hat, so dass die Freiheitsgrade der Schwingung einer relativ weit außenliegenden Masse definiert eingeschränkt sind. Dadurch ergeben sich Vorteile wie z.B. eine erhöhte Schockrobustheit oder auch eine verringerte Adhäsionsneigung zur Substratfläche.

Unter den mannigfaltigen Konzepten von mikromechanischen (MEMS) Drehratensensorstrukturen sind insbesondere die mechanisch entkoppelten Vibrationssensoren sehr effektiv und mit einem hohen Signal-Rausch Verhältnis behaftet. Diese beruhen auf dem Prinzip, dass die Corioliskraft Energie von einer Schwingungsmode, der Primärschwingung, in eine zweite Schwingungsmode, die Sekundärschwingung, einkoppelt. Die Amplitude der Sekundärschwingung ist proportional zur Drehrate und kann z.B. kapazitiv ausgewertet werden.

Drehratensensoren messen die Rotationsgeschwindigkeit eines Körpers. Somit finden sie überall dort Anwendung, wo die Messung von Inertialbewegungen wie Beschleunigung und Drehrate erforderlich ist:

➢ Automobilbau          Navigation, Fahrerassistenzstyme, ESP Roll Over Detection
➢ Flugzeugbau          Navigation
➢ Militärische Anwend.          Navigation
➢ Robotik          Messung, Steuerung
➢ Biomedizin          Erfassen von Bewegungsabläufen ➢ Life Science          Navigation, Erfassen von Bewegungsabläufen

Drehratensensoren nutzen als Messprinzip meistens die Wirkung des Sagnac-Effektes (Interferenz von Lichtstrahlen in einer aufgerollten Glasfaser) oder der Coriolis-Kraft in Form eines Kreisels oder eines bewegten Feder-Masse-Systems. Insbesondere letzteres kann durch Fabrikationsmethoden der Mikrosystemtechnik (engl. MEMS) stark miniaturisiert und somit effizienter und kostengünstiger hergestellt werden.

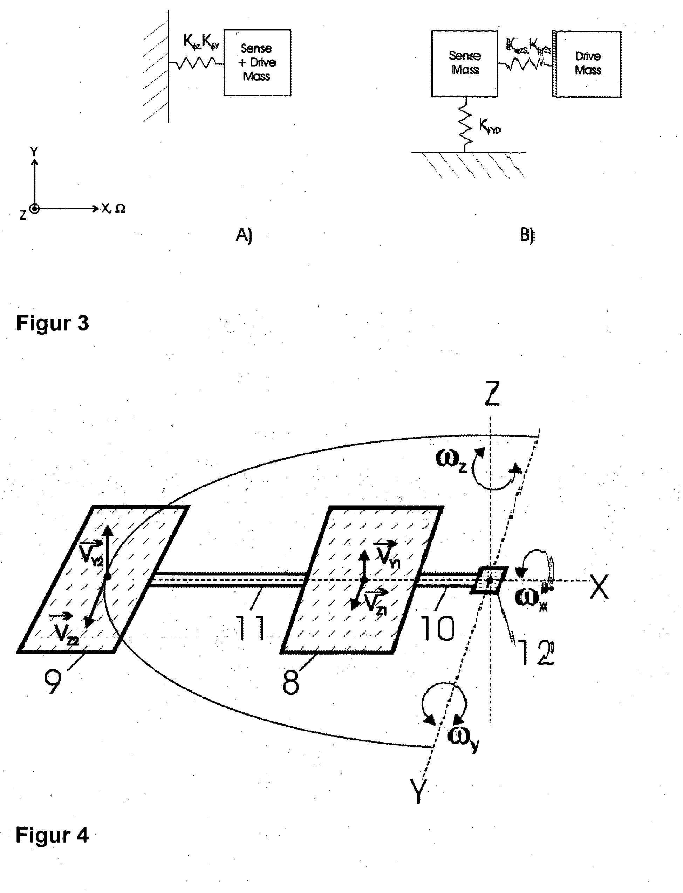

In **Fig. 3** ist das Funktionsprinzip von rotatorischen Vibrationsgyroskopen dargestellt. **Fig. 3A** zeigt schematisch die Funktionsweise für ein rotatorisches Vibrationsgyroskop. Eine Masse (Sense+Drive Mass, also eine schwingende und sich unter Einwirkung der Corioliskraft gleichzeitig aus der Schwingebene herausbewegende Masse) ist über eine

Feder an einem Ankerpunkt befestigt. Die Feder ist dabei konstruktionstechnisch so ausgeführt, dass deren Bewegung auf 2 Freiheitsgrade reduziert ist:

- eine Rotationsbewegung um die Z-Achse (Antriebsachse, Drive Mode) mit Federkonstante $k_{\Phi Z}$
- eine Rotationsbewegung um die Y-Achse (Detektionsachse, Sense Mode) mit Federkonstante $k_{\Phi Y}$.

Gemessen wird eine Drehrate um die X-Achse.

Die Schwingmasse wird in eine resonante Bewegung versetzt, so dass ein oszillierender Geschwindigkeitsvektor oder aber ein oszillierendes Trägheitsmoment eingeprägt wird. Dementsprechend werden die Sensorkonzepte in OMV (Oscillating Momentum Vector) und OVV (Oscillating Velocity Vector) gegliedert. Eine einwirkende Corioliskraft führt zu einer korrespondierenden orthogonalen Auslenkbewegung der Schwingmasse (gekoppelt) und kann somit erfasst werden.

Bei einem mechanisch entkoppelten Vibrations-Drehratensensor (Fig. 3B) wird eine Masse (Antriebsmasse oder Drive Mass) mit zwei Freiheitsgraden in der Primärschwingung angeregt. Dieser Drehratensensor umfasst dementsprechend eine erste, in einer x-y-Ebene angeordnete Masse (auch als Primärschwinger, Antriebsmasse oder -element, drive mass oder drive element bezeichnet), die zu einer oszillierenden Schwingung angeregt wird, und eine zweite, für die Detektion verwendete Masse (auch als Sekundärschwinger, Detektionsmasse oder -element, sense mass oder sense element bezeichnet), die über Verbindungsglieder (Federn) mit der ersten Masse verbunden ist. Die durch eine aufgeprägte Drehrate induzierte Corioliskraft führt zu einer Auslenkung im zweiten Freiheitsgrad. Die Entkopplung kann auf verschiedene Art und Weise bewirkt werden. In einer ersten Variante wirkt dann, wenn beispielsweise eine Drehbewegung Ω des Sensors um eine Achse senkrecht zur Schwingungsachse auftritt, die Corioliskraft auf die Massenpunkte des in Rotationsschwingung befindlichen Körpers ein; durch geeignete Maßnahmen wird diese Kraft auf die Detektionsmasse übertragen. Deren Auslenkung in dieser Dimension wird sodann mit geeigneten Mitteln, z.B. kapazitiven Elektroden, detektiert. Dabei ist die Kopplung zwischen den beiden Massen oder Elementen idealerweise so, dass die Rotationsschwingung nicht auf die zweite Masse oder das zweite Element (sense mass) übertragen wird. Dies lässt sich verwirklichen, indem diese Masse so aufgehängt ist, dass sie nur einen einzigen Bewegungsfreiheitsgrad besitzt. In einer zweiten Variante wird die Rotationsbewegung der ersten Masse auf die zweite Masse übertragen, so dass die Corioliskraft auf die Massenpunkte beider Körper einwirkt, wobei die erste Masse jedoch so aufgehängt ist, dass sie nicht aus der x-y Ebene verkippt oder ausgelenkt werden kann.

Die erste Variante hat den Vorteil, dass die Detektion der Auslenkung und damit der Drehrate nur wenig beeinflusst von der Antriebs-Drehbewegung gemessen werden kann. Da die Primärbewegung im Antriebs-Mode nicht oder nur partiell erfasst wird, weist das Nutzsignal ein höheres Signal/Rausch-Verhältnis auf. Nachteilig ist daran allerdings immer noch, dass sich das Antriebselement bei Einwirkung einer Drehrate aus der x-y-Ebene heraus verkippt, was die Antriebsleistung verschlechtert. Bei der zweiten Variante sind diese Vor- und Nachteile vertauscht.

Die beiden Schwingungsmoden können in allen Varianten prinzipiell Translations- oder Rotations-Bewegungen sein. Auch die vorliegende Erfindung betrifft Drehratensensoren, deren aktiver Antrieb translatorisch oder rotatorisch erfolgt, wobei rotatorische Systeme bevorzugt sind. Rotatorische Systeme sind in der Regel weniger empfindlich gegenüber translatorischer Schock- und Vibrationseinkopplung.

Da die Prinzipien für beide Systeme die gleichen sind (siehe beispielsweise DE 196 41 284 C1), werden die der Erfindung zugrundeliegenden Prinzipien und deren Ausführung nachstehend nur anhand rotatorischer Systeme diskutiert, wobei jedoch klar sein sollte, dass auch die translatorischen Systeme von der Erfindung umfasst sein sollen.

Für Drehratensensoren und speziell für MEMS Sensoren gibt es eine Vielzahl von Systemansätzen und dementsprechend viele Veröffentlichungen und Patentanmeldungen. In der nachfolgenden Tabelle sind einige wesentliche Druckschriften aufgelistet, welche auf dem Prinzip eines Vibrationsgyroskopes beruhen. In den Spalten sind zudem die Ein- und Ausgangsachsen dargestellt. Als Input Achse wird die zu detektierende Drehachse definiert. Die Drive-Achse ergibt sich aus der Bewegungsrichtung des Primär- oder Antriebsmode, welcher entweder eine translatorische (Trans) oder eine rotatorische (Rot) periodische Bewegung sein kann. Die Sense-Achse liegt in der Regel senkrecht zur Drehachse und zur Drive-Achse. Die Achsenbezeichnungen X, Y und Z beziehen sich auf einen planar gefertigten Sensor, wobei X und Y in der Sensorebene liegen und Z senkrecht zu dieser Bauteilebene liegt.

Tabelle 1

| Patent | Art | Input Achse (Detektion) | Drive Achse | Sense Achse | Entkoppelt |
|--------|-----|-------------------------|-------------|-------------|------------|
| US4598585 | OMV | Z | Y Rot | X Rot | Nein |
| US5203208 | OMV | Z | Y Rot | X Rot | Nein |
| US5535902 | OW | X | Z Rot | Y Rot | Nein |
| US5650568 | OW | X | Z Rot | Y Rot | Nein |
| US5635640 | OW | X | Z Rot | Y Rot | Nein |
| US6505511 | OW | Z | X Trans | Y Trans | Ja |
| US5895850 | OMV | Z X | X Y Trans | Y Z Trans | Ja |
| US6062082 | OW | X | Z Rot | Y Rot | Nein |
| EP0906557 | OW | X | Z Rot | Y Rot | Ja |
| WO2/16871 | OW | Z | X Trans | Y Trans | Ja |
| US5955668 | OW | X | Z Rot | Y Rot | Ja |

Zwei der in der obigen Tabelle aufgeführten Druckschriften beschäftigen sich mit rotatorischen, mechanisch entkoppelten Drehratensensoren, mit Oszillation des Anregungselements in x-y-Ebene und Auslenkung des Detektionselements um die y-Achse. Dabei werden die beiden oben bereits prinzipiell erwähnten, unterschiedlichen Varianten realisiert. In der EP 0906557 B1 wird ein Drehratensensor mit entkoppelten orthogonalen Primär- und Sekundärschwingungen beschrieben. Der Primärschwinger ist über eine Primärschwingeraufhängung mittig am Substrat befestigt und hält über Torsionsfedern einen in derselben Ebene befindlichen, als Detektionselement vorgesehenen Sekundärschwinger, wobei die Torsionsfedern die induzierte Schwingung des Primärschwingers starr auf den Sekundärschwinger übertragen. Bei einer Drehung des Sensors um eine Ebene, die senkrecht auf der Ebene steht, in der sich die beiden Schwingungselemente befinden, wirkt die Corioliskraft auf beide Elemente ein. Während der Sekundärschwinger hierdurch aus seiner Ebene verkippt wird, bleibt der Primärschwinger in seiner Ebene, da er zum einen so am Substrat verankert ist, dass ein Verkippen aus dieser Ebene heraus nicht gut möglich ist und zum anderen die Torsionsfedern eine Rückübertragung der auf den Sekundärschwinger einwirkenden Corioliskraft auf den Primärschwinger verhindern.

Den umgekehrten Weg geht der Vorschlag gemäß US 5,955,668: Hier ist das Schwingungselement, das zu einer Radialschwingung angeregt wird, kreisförmig um ein verkippbares Sensorelement angeordnet, das über zwei Anker am Substrat befestigt ist. Biegefedern verbinden das Schwingungselement mit dem Sensorelement, und diese sind so ausgestaltet, dass sie weder die Schwingung des Schwingungselements auf das Sensorelement übertragen noch die durch Corioliskraft verursachte Kippbewegung des Sensorelements auf das Schwingungselement rückübertragen.

In **Figur 4** ist der prinzipielle Aufbau eines rotatorischen, mechanisch entkoppelten Drehratensensors gemäß der zweiten Variante schematisch dargestellt. Ein bewegliches Masseelement (8) (Detektionselement; Sense Mass) ist zentral an einem Ankerpunkt (12) über eine Federstruktur (10) aufgehängt. Über eine zweite Federstruktur (11) ist ein weiteres Masseelement (9) (Antriebs element, Drive Mass) fest mit (8) verbunden. Das Masseelement (9) wird zu einer periodischen Bewegung um die z-Achse angeregt.

Die Dimensionen sind konstruktiv so ausgeführt, dass

1. das Masseelement 9 im Wesentlichen über zwei Bewegungsfreiheitsgrade verfügt:

- Eine rotatorische Bewegung um ein Achse parallel zur Z-Achse oder auch um die z-Achse selbst mit einem Geschwindigkeitsvektor $v_{Z2}$.
- Eine rotatorische Bewegung um eine Achse parallel zur Y-Achse oder um die Y-Achse selbst mit einem Geschwindigkeitsfeld $v_{Y2}$

2. das Masseelement 8 im Idealfall nur einen Freiheitsgrad hat, nämlich eine Rotationsbewegung um die Y-Achse mit einem Gesc hwindigkeitsfeld $v_{Y1}$.

Ist der Geschwindigkeitsvektor $V_{Z1}$ der Masse 8 gleich oder nahezu Null, so spricht man von einem mechanisch entkoppelten System bezüglich dieses rotativen Freiheitsgrades. Es wird dann bei einer Bewegung von Masse 9 um die Z-Achse keine Bewegungsenergie zur Masse 8 übertragen.

Im Betrieb wird nun das Masseelement 9 in eine periodische Schwingung um eine Z-Achsenparallele mit Frequenz $f_z$ und maximaler Geschwindigkeitsamplitude $v_{Z2}$ versetzt (Primärschwingung, Primärmode). Wird das Schwingungssystem um die sensitive Achse X mit einer Drehrate $\omega_x$ gedreht, so wirkt auf die bewegte Masse 9 eine Scheinkraft, die Corioliskraft, ein, die über folgende Gleichung definiert ist:

$$\vec{F}_{Cor.} = 2 * m_2 * (\vec{\omega}_x \times \vec{V}_{Z2}(t))$$

mit

| $F_{Cor}$ | Corioliskraft |
| $m_2$ | Masse des Primärschwingers 2 |
| $\omega_x$ | von außen eingeprägte Drehrate |
| $V_{Z2}$ | Geschwindigkeit der Primärmasse |

Somit wird ein oszillierendes Kraftfeld senkrecht zur X-Y Ebene erzeugt, welches zu einer Auslenkung der Masse (9) aus der Ebene führt. Die Z-Auslenkung (Sekundärmode) wird über das Federelement 11 auf das Masseelement 8 übertragen. Die Größe der Auslenkung des Masseelements 9 kann also direkt zur Bestimmung der Drehrate verwendet werden.

Die Anregung einer mikromechanischen Struktur kann z.B. auf folgende Weise bewerkstelligt werden: elektrostatisch, z.B. über Anlegen von Spannung an Fingerelektroden, piezoelektrisch oder magnetisch, durch Einkoppeln eines Magnetfeldes.

Die Messung einer Auslenkung kann auf vielfältige Weise erfolgen, z.B. kapazitiv mittels Referenzabstands-Elektroden, differenz-kapazitiv mittels paarweise angeordneten Abstands-Elektroden, elektrostatisch mittels Referenzabstands-Eiektroden, piezoelektrisch, piezoresistiv oder optisch.

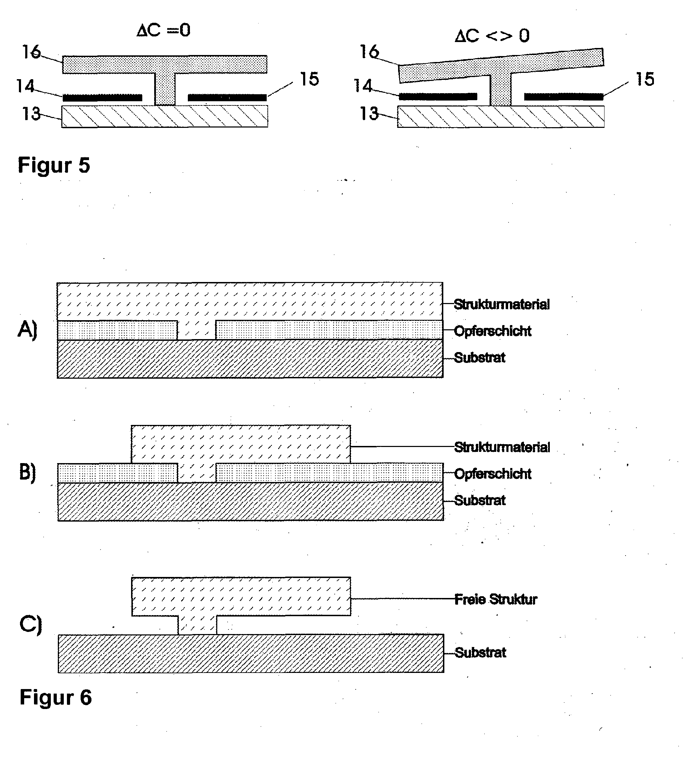

Die meisten Drehratensensor-Systeme beruhen auf einer kapazitiven Messung der Auslenkung der Sense-Masse. Diese ist in der Regel als dünne Platte in der x-y-Ebene ausgebildet. In **Figur 6** ist schematisch dargestellt, wie die erfindungsgemäßen Drehratensensoren im Schnitt durch eine x-z- oder y-z-Achse aufgebaut sein können und wie sie sich herstellen lassen. Der gezeigte Aufbau ist besonders günstig, da er aus nur wenigen Bestandteilen gebildet wird und einen integralen Aufbau von Anker, Schwingungselement, Verbindungselementen (Federn) und Detektionselementen ermöglicht: Ein Substrat, z.B. ein Silizium-Wafer, wird mit einer strukturierten Opferschicht bedeckt, z.B. einem mit einem geeigneten Ätz- oder Lösungsmittel wieder auflösbaren Oxid. Darüber wird eine strukturierbare Schicht aus einem Material wie z.B. Polysilizium aufgebracht, aus dem das Schwingungselement, die Ankerstruktur, die Verbindungselemente und die Detektionselemente gebildet werden sollen (Fig. 6a). Die strukturierbare Schicht ist am Ort des späteren Ankers direkt mit dem Substrat verbunden. Sie kann ausschließlich zweidimensional, z.B. durch geeignete Maßnahmen wie Belichten durch eine Lochmaske und anschließendes Herauslösen der unbelichteten, unvernetzten Flächen strukturiert werden (Fig.6b). Anschließend wird die Opferschicht aufgelöst und entfernt.

Die kapazitive Messung kann am genausten erfolgen, wenn eine differentielle Kapazität gemessen wird, siehe **Fig. 5**, worin ein Substrat 13 mit darauf angebrachten Gegenelektroden (Messelektroden) A und B (14 und 15) sowie die Platte 16 gezeigt sind, die sich bei einer Drehbewegung des Sensors um eine Achse X in Y-Richtung neigt (in dieser Figur ist die Papierebene die Z-Y-Ebene).

In einem idealen Fertigungsprozess ist in der Ruhelage die resultierende Differenzkapazität $\Delta C$ gleich Null. In der Realität beobachtet man häufig eine Vorverkippung der beweglichen Teile aus der waagerechten Ruhelage. Dies kann z.B. von anisotropen Materialeigenschaften hervorgerufen werden. Beispiele hierfür sind das Vorhandensein von Mikrokristalliten in Polysilizumschichten, anisotroper Schichtstress, thermischer Schichtstress oder ähnliches.

Durch den Kapazitätsunterschied wird im Nutzsignal ein Offsetwert in die AuswerteElektronik eingespeist. Da entsprechende Verstärkerstufen dadurch eine höhere Dynamik aufweisen müssen, führt eine Vorverkippung zu einer reduzierten Auflösung des Sensorsystems. Derzeitige MEMS Sensorsystem können bei einer Bandbreite von 25 Hz eine Drehrate von 0,1°/s auflösen.

Eine Drehrate von 0,1°/s führt typischerweise zu einer Oszillation um die Y-Achse mit der Amplitude $8 \times 10^{-7}$ Grad für die Masse 9 und von $4 \times 10^{-7}$ Grad für die Masse 8, siehe Fig. 4. Das entspricht einer Kapazitätsänderung von 3 aF für Masse 8. Die Grundkapazität beträgt 3 pF, es müssen also Kapazitätsänderungen im ppm Bereich aufgelöst werden.

Zum anderen kann es entweder während der Fertigung oder im Laufe der Lebensdauer des Sensorelementes zu einem Kontakt zwischen beweglichen Sensorelementen und/oder feststehenden Elementen kommen. Im ungünstigen Fall, wenn die Rückstellkräfte zu klein sind, wird durch zahlreiche Adhäsionkräfte die Auslenkung zeitweise oder dauerhaften aufrechterhalten, so dass der Sensor nicht mehr funktionstüchtig ist und haften bleibt ("Sticking"). Auch ein mechanischer Schock oder Vibrationseinwirkung kann einen innigen Kontakt von beweglichen Sensorelementen hervorrufen, so dass diese festklemmen oder -kleben. Insbesondere die weit von einem Ankerpunkt befindlichen äußeren Sensorstrukturen weisen durch die Hebelwirkung eine höhere Adhäsionsneigung auf. Durch Erhöhung der Rückstellkräfte, z.B. durch breitere Federn, kann die bewegliche Struktur steifer konstruiert werden. Dadurch wird jedoch auch das Nutzsignal reduziert, da die Corioliskraft zu einer geringeren Plattenauslenkung und somit zu einer reduzierten Sensitivität führt.

Es ist Aufgabe der vorliegenden Erfindung, Drehratensensoren der voranstehend erwähnten Art bereitzustellen, bei denen die Sensitivität ausreichend bleibt, jedoch die Robustheit gegenüber parasitärer Umgebungseinwirkung verbessert wird, um eine gute Balance zwischen diesen sich gegenseitig beeinflussenden Parametern zu erhalten.

Diese Aufgabe wird gelöst durch die Bereitstellung eines Drehratensensors zur Detektion einer Drehung $\Omega$, um die der Sensor gedreht wird, wobei der Sensor ein Substrat und eine Antriebs- und Detektionsanordnung aufweist, die sich im Wesentlichen flächig oberhalb der Substratoberfläche befindet, wobei die Antriebs- und Detektionsanordnung eine Antriebsmasse und eine Detektionsmasse aufweist, die in unterschiedlichen Abständen von einem Zentrum der Detektionsanordnung symmetrisch um dieses Zentrum herum angeordnet sind und deren Schwingungsmoden teilweise aufeinander übertragen werden können und teilweise entkoppelt sind, wobei die Drehung $\Omega$ dadurch detektiert wird, dass eine Verkippung der Detektionsmasse, aus der Flächenebene der Antriebs- und Detektionsanordnung heraus detektiert wird, wobei diejenige der beiden Massen, die einen größeren Abstand zu dem genannten Zentrum aufweist, unter der Einwirkung von Corioliskraft aus der genannten Flächenebene heraus verkippen kann und mit dem Substrat über ein Verbindungsmittel in Form symmetrischer Außenanker derart verbunden ist, dass die Rückstellung der genannten Verkippung durch das Verbindungsmittel unterstützt wird.

In einigen dieser Ausgestaltungen ist die Antriebs- und Detektionsanordnung wie im Stand der Technik an einem Anker über dem Substrat aufgehängt. In anderen Ausführungsformen kann das erfindungsgemäß einzusetzende Verbindungsmittel, über das die äußere Masse mit dem Substrat verbunden ist, die Aufhängungs- bzw. Haltefunktion für die Antriebs- und Detektionsanordnung vollständig übernehmen, so dass ein innerer Anker oder eine innere Ankerstruktur, die ansonsten diese Funktion zumindest teilweise erfüllen, wegfallen kann. Dies wird weiter unten im Einzelnen erläutert.

Die näher am Zentrum liegende Masse kann über eine Ankerstruktur mit dem Substrat verbunden sein. Bei dieser Ankerstruktur kann es sich um einen zentrisch angeordneten (siehe Figur 1) oder einen mehrteiligen Anker (siehe Figur 7) handeln, dessen Teile bezüglich der y-Achse und gegebenenfalls auch der x-Achse der Antrieb- und Detektionsanordnung spiegelsymmetrisch angeordnet sind. Die Ankerstruktur kann einen inneren Befestigungsring aufweisen, der über Federn in einer Aussparung der näher am Zentrum befindlichen Masse an dieser angebracht und über eine stressentkoppelte mechanische Struktur an der Ankerstruktur befestigt ist, siehe Figur 10.

Weitere bevorzugte Ausführungsformen der Erfindung ergeben sich aus den Unteransprüchen.

Gemäß der vorliegenden Erfindung ist ein solcher Drehratensensor zur Detektion einer Drehung Ω, um die der Sensor gedreht wird, besonders bevorzugt, der ein Substrat und eine Antriebs- und Detektionsanordnung aufweist, die sich im Wesentlichen in x-y-Richtung flächig oberhalb der Substratoberfläche befindet, wobei die Antriebs- und Detektionsanordnung über einen Anker mit dem Substrat verbunden sein kann, aber nicht muss, und

(i) eine Antriebsmasse, die durch Anregung in eine translatorische Schwingung in y-Richtung oder eine rotatorische Schwingung um eine z-Achse versetzt werden kann, sowie
(ii) eine Detektionsmasse umfasst, die sich bei Einwirkung einer um eine x-Achse erfolgenden Drehung Ω auf den Drehratensensor aus der x-y-Ebene heraus um eine y-Achse verkippen lässt,

wobei die Antriebsmasse und die Detektionsmasse spiegel- und/oder drehsymmetrisch um ein Zentrum der Antriebs- und Detektionsanordnung und, sofern ein zentraler Anker vorhanden ist, um diesen Anker angeordnet sind und eine der genannten Massen in einem größeren Abstand zu dem Zentrum angeordnet ist als die andere dieser Massen, wobei Verbindungselemente vorhanden sind, die entweder

(a) dann, wenn sich die Detektionsmasse in einem größeren Abstand zu dem Zentrum befindet als die Antriebsmasse, die Schwingung des Antriebselements in x-y-Ebene auf das Detektionselement übertragen, aber verhindern, dass sich das Antriebselement bei Einwirkung der Drehung Ω auf den Sensor aus der x-y-Ebene heraus verkippen lässt, oder diese Kippung vermindern, oder die
(b) dann, wenn sich die Antriebsmasse in einem größeren Abstand zu dem Zentrum befindet als die Detektionsmasse, ein Verkippen des Antriebselements bei Einwirken der Drehung Ω auf den Sensor zulassen, aber eine Übertragung der Schwingung des Antriebselements in x-y-Ebene auf das Detektionselement verhindern oder vermindern,

dadurch gekennzeichnet, dass diejenige der genannten Massen, die einen größeren Abstand zum Zentrum besitzt, über mindestens zwei Verbindungsmittel mit dem Substrat verbunden ist, derart, dass die Rückstellung der Verkippung aus der x-y-Ebene heraus durch die Verbindungsmittel unterstützt wird.

Durch die Unterstützung der Rückstellung wird die Verkippung bei den erfindungsgemäßen Drehratensensoren reduziert, und zwar je nach Ausgestaltung unterschiedlich, beispielsweise um ca. 15 bis 60%.

Vorzugsweise führt/führen das bzw. die Schwingungselemente eine rotatorische Schwingung aus.

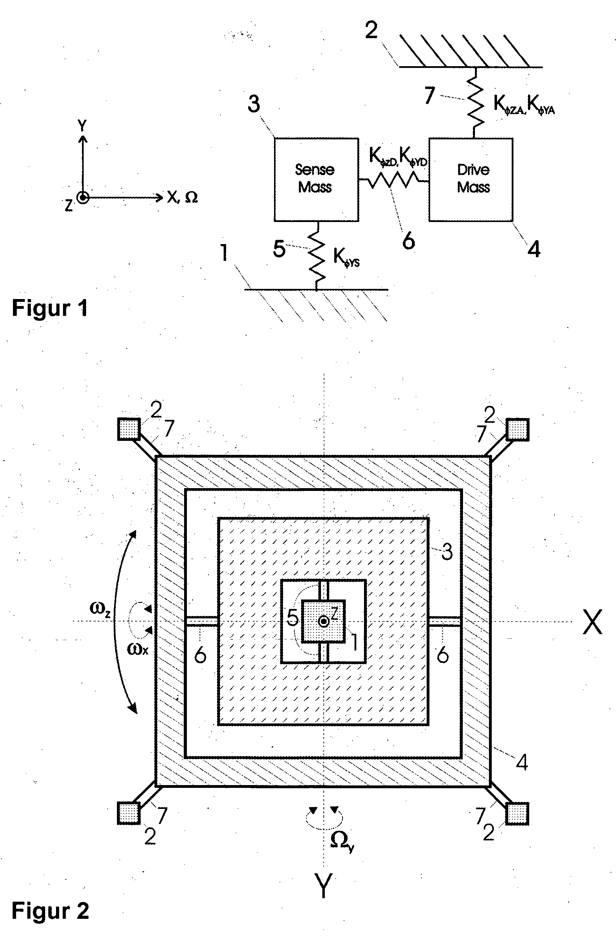

Nachstehend soll die Erfindung im Zusammenhang mit den Figuren 1 und 2 näher erläutert werden.

**Figur 1** zeigt die Prinzipskizze eines mechanisch entkoppelten Drehratensensors mit Außenfedern, und zwar gemäß Variante (b) der obigen bevorzugten Ausführungsform der vorliegenden Erfindung und mit einem zentralen Anker. Eine Detektionsmasse (sense mass) 3 ist über ein Ankerfederelement (5) an einem zentralen Ankerpunkt 1 befestigt. Durch die Auslegung der Feder hat das Detektionselement einen Freiheitsgrad, hier eine Rotation aus der x-y-Ebene mit der dem Federelement 5 zugeordneten Federkonstante $k_{\Phi YS}$. Die Antriebsmasse (Drive-Mass) 4 ist einerseits durch das Transferfederelement 6 mit der Detektionsmasse (Sense-Mass) verbunden. Das Federelement hat die beiden rotatorischen Freiheitsgrade $k_{\Phi ZD}$ und $k_{\Phi YD}$. Zusätzlich ist das Antriebselement über das Aussenfederelement 7 mit dem Ankerpunkt 2 verbunden.

Im Sensorbetrieb wird das Antriebselement bzw. die Antriebsmasse in eine oszillatorische Bewegung um die Z-Achse versetzt. Durch die Federkonstanten $k_{\Phi ZD}$ und $k_{\Phi ZA}$ der Federelemente 6 und 7 sowie die Trägheitsmomente wird diese Bewegung bezüglich Eigenfrequenz und Amplitude definiert.

$$f_D = \sqrt{\frac{k_{\Phi ZD} + k_{\Phi ZA}}{I_{ZZ}}}$$

mit

$f_D$     Resonanzfrequenz der Primärschwingung (Drive)

$k_{\Phi ZD}$ Federkonstante der Drive-Feder (Element 6)
$k_{\Phi ZA}$ Federkonstante der Drive-Feder (Element 7)
$I_{ZZ}$ Massenträgheitsmoment um die Z-Achse

Eine einwirkende Corioliskraft führt durch das Geschwindigkeitsvektorfeld von 4 zu einer Auslenkung aus der Ebene. Diese Bewegung wird durch die Federkonstanten $K_{\Phi YD}$ und $K_{\Phi YA}$ sowie die Trägheitsmomente von 4 definiert.

$$ f_S = \sqrt{\frac{k_{\Phi YD} + k_{\Phi YA}}{I_{YY}}} $$

mit

$f_S$ Resonanzfrequenz der Sekundärschwingung (Sense)
$k_{\Phi YD}$ Federkonstante der Drive-Feder (Element 6)
$k_{\Phi YA}$ Federkonstante der Aussen-Feder (Element 7)
$I_{YY}$ Massenträgheitsmoment um die Y-Achse

Durch die Transferfeder 6 wird die Bewegung des Antriebselements teilweise auf das Detektionselement übertragen, wobei das Ausmaß dieser Übertragung von den Eigenschaften der Transferfeder bestimmt wird. Die Detektionsmasse folgt aufgrund des eingeschränkten Freiheitsgrades nur der durch die Corioliskraft induzierten Bewegung. Im Idealfall ist sie vom Mode der Antriebsmasse entkoppelt, d.h. sie kann deren oszillatorischer Primärbewegung nicht folgen. Dies kann dadurch bewirkt werden, dass die Feder 6 in den entsprechenden Freiheitsgraden nicht eingeschränkt ist, und/oder dadurch, dass die Aufhängung 5 am Substrat bezüglich Torsionsbewegungen um die z-Achse oder Biegebewegungen aus der z-Achse heraus starr ist.

Eine Reduktion der Freiheitsgrade von Federn kann durch konstruktive Auslegung des Federelementes erreicht werden. Die lateralen Freiheitsgrade werden durch die Wahl einer Biegefeder nahezu Null. Zudem können durch eine geeignete Wahl des Geometriemaßes einer Biegefeder (Länge, Breite, Höhe) anisotrope Federkonstanten erzeugt werden. Schließlich können rotatorische Freiheitsgrade durch eine konstruktive Anordnung mehrerer Biegefedern zu einem Federelement eingeschränkt werden, so dass nur eine rotatorische Bewegungsrichtung möglich ist. Derartige Anordnungen sind dem Fachmann geläufig.

In **Figur 2** ist eine konkrete Ausgestaltung der in Figur 1 gezeigten prinzipiellen Anordnung eines entkoppelten Drehratensensors schematisch dargestellt. Es sollte klar sein, dass die räumlichen Abmessungen und Geometrien tatsächlich frei wählbar sind.

Eine innere Masse 3 ist über Federstrukturen 5 zentral an einem Ankerpunkt 1 befestigt. Eine äußere Massenstruktur 4 ist über Federstrukturen 6 mit der inneren Masse 3 verbunden. Zusätzlich sind an der äußeren Masse 4 Federstrukturen 7 angebracht. Diese verbinden die Masse mit außenliegenden, festen Ankerpunkten 2. Die gesamte freitragende Sensorstruktur ist somit am zentralen Ankerpunkt sowie an peripheren äußeren Ankerpunkten befestigt. Die äußeren Federn erhöhen die Rückstellkräfte in den kritischen Aussenbereichen und gleichen Prozessinhomogenitäten aus. Dadurch können die oben genannten Probleme erheblich minimiert werden.

Die Rückstellkräfte sollten insgesamt prinzipiell nicht zu groß gewählt werden, da dadurch die Sensitivität des Sensors eingeschränkt wird. Die vorliegende Erfindung trägt diesem Problem Rechnung, indem die durch die Feder 6 dargestellte Rückstellkraft zwischen Antriebsmode und Sense-Mode räumlich und konstruktiv getrennt ist zu Federelement 7, welches die Rückstellkräfte zur Verringerung von Adhäsionsneigungen bestimmt.

Die Feder 6 sorgt für einen Transfer des Detektions-Bewegungsmomentes auf den inneren Teil der Antriebs- und Detektionsanordnung. Die räumliche Anordnung dieses Federelementes steht in keiner funktionellen Relation zum radialen Abstand vom Ankerpunkt und kann frei gewählt werden.

Die außenanliegenden, Federn führen zwar zu einer erhöhten Steifigkeit des Primärmodes in Sense-Richtung. Entsprechend muss die Transferfunktion von Feder 7 angepasst werden. Da die Federn 7 jedoch in einem radialen Maximalabstand zum (hier zentralen) Ankerpunkt liegen, ist durch die große Hebelwirkung ein hohes Rückstellmoment erreicht. Die Federn sollten dabei vorzugsweise so ausgeführt werden, dass der Primärmode nicht wesentlich gedämpft wird. Dies lässt sich z.B. durch die Auswahl von Federkonstanten wie in den Unteransprüchen definiert erreichen.

In einer speziellen, sehr günstigen Ausführungsform der Erfindung besitzen die Federelemente 5, 7 und 6 die folgenden Eigenschaften:

7

| Federelement | Funktion | $k_\Phi$ [10⁻⁶ Nm/rad] | $k_{\Phi Y}$ [10⁻⁶ Nm/rad] | $k_{\Phi Z}$ [10⁻⁶ Nm/rad] |
|:---:|:---:|:---:|:---:|:---:|
| 5 | zentrale Ankerfeder | 28 | 11 $k_{\Phi YZ}$ | 420 $k_{\Phi ZZ}$ |
| 6 | Transferfedern Drive-Sense | 25 | 20 $k_{\Phi YD}$ | 16 $k_{\Phi ZD}$ |
| 7 | Außenfeder Rückstellfeder | 3.8 | 4.5 $k_{\Phi YA}$ | 1.6 $k_{\Phi ZA}$ |

Die symmetrisch angeordneten Außenanker korrigieren Verkippungen und ziehen die bewegliche Struktur in eine waagerechte Ruhelage. Dadurch können prozessbedingte Inhomogenitäten und Prozessschwankungen ausgeglichen werden. Dies führt zu einem verbesserten Nutzsignal, und somit zu einer besseren Linearität, einem kleinerem Rauschen und einem verringerten Nullsignal.

Außerdem wird die Neigung zum Festkleben nach einem Schock oder aufgrund von Vibrationseinwirkung beseitigt oder stark reduziert, da die Rückstellkräfte der Außenanker ihre Angriffspunkte in der Nähe der Aufschlagsstellen haben und deshalb ein Festkleben dort unterbinden. Zudem wird die Störanfälligkeit bei Schock- oder Vibrationseinwirkung erheblich verringert, so dass ein kleineres Fehlsignal ausgegeben wird.

In der hier beschriebenen und gezeigten Ausführungsform liegt die Verminderung der Kippung bei ca. 30%.

Die erfindungsgemäße Wirkung führt zu einem erheblichen Vorteil dieses Sensortyps gegenüber anderen Systemen. Insbesondere die hohen Anforderungen in der Automobilindustrie erfordern eine stetig wachsende Robustheit gegenüber Umwelteinflüssen wie Schock und Vibration.

Es sollte klar sein, dass die obige Ausgestaltung nur eine von vielen ist, mit denen sich die vorliegende Erfindung realisieren lässt. So kann die Antriebsmasse und/oder die Detektionsmasse statt aus jeweils einer Masse (die im voranstehend beschriebenen Beispiel rahmenförmig ausgebildet ist) auch aus einer Mehrzahl von Masseelementen bestehen. Die einzelnen Elemente der Antriebsmasse können untereinander verbunden sein; sie können aber auch jeweils separat angetrieben und mit jeweils einer oder mehreren Elementen der Detektionsmasse verbunden sein, wobei die Bindeglieder die gleichen Anforderungen erfüllen müssen wie oben für die Verbindungselemente und Ankerelemente beschrieben. Gleiches gilt mutatis mutandis auch für das Detektionsmasse.

Anstelle der oben erläuterten Ausgestaltung ist es auch möglich, die Antriebsmasse an einer inneren Ankerstruktur, z.B. einem zentralen Anker, und die Detektionsmasse an der äußeren Ankerstruktur (d.h. über die genannten Verbindungsmittel) zu befestigen.

Aufgrund der erfindungsgemäß vorgesehenen Verbindungsmittel muss im Übrigen nicht notwendigerweise eine innere Ankerstruktur vorhanden sein; schon gar nicht muss diese aus einem zentralen Anker bestehen wie in der voranstehend beschriebenen Ausführungsform. Das gilt insbesondere für diejenigen Ausgestaltungen, in denen die Detektionsmasse weiter innen liegend und die Antriebsmasse weiter außen liegend angeordnet ist. Dazu sei auf Folgendes hingewiesen:

Sinn und Zweck der Aufhängung der Detektionsmasse im Innenbereich an einem Anker ist neben der mechanischen Befestigung vor allem das Erzeugen eines Rückstellmoments. Die Antriebsschwingung wird zwar über die Verbindungselemente (6) zum Teil schon wesentlich entkoppelt, d.h. die innere Masse folgt der Ringschwingung nicht oder nur geringfügig. Trotzdem sollte ein Rückstellmoment auf die innere Masse einwirken, so dass auch das zum Teil übertragene und somit reduzierte Kraftmoment der Ringschwingung unterdrückt oder kompensiert wird.

Dieses Rückstellmoment kann nun auf verschiedene Weise erzeugt werden. In der voranstehend beschriebenen Ausgestaltung geschieht dies durch eine zentrale Aufhängung an einem mit dem Substrat verbundenen Anker. Es sind aber noch andere Methoden realisierbar. Einige spezielle Beispiele hierfür werden nachstehend beschrieben.

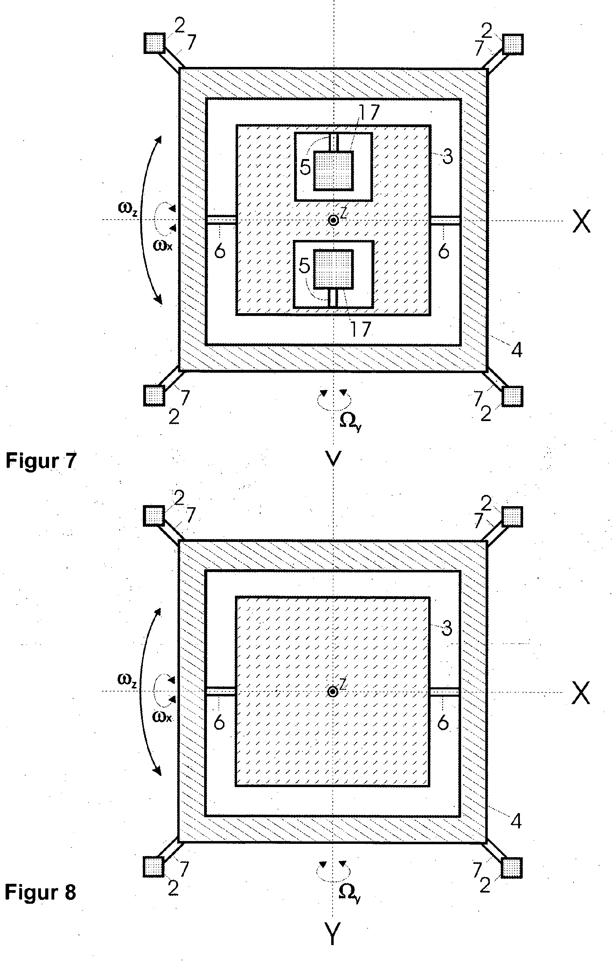

So zeigt **Figur 7** eine Ausgestaltung mit einer spiegelsymmetrischen, jedoch nicht zentralen Verankerung der Detektionsmasse, wobei gleiche Teile mit den gleichen Bezugsziffern bezeichnet sind. Als Verankerung dient hier eine Verankerung über die Punkte 17, die auf der zentralen y-Achse liegen. Auch hinsichtlich der x-Achse ist diese Ankerstruktur spiegelsymmetrisch.

Gegebenenfalls kann die innere Masse auch ausschließlich über die äußeren Verbindungsmittel aufgehängt sein. Eine solche Ausgestaltung zeigt Figur 8, in der wiederum gleiche Teile mit den gleichen Bezugsziffern benannt sind. Hier wird das Rückstellmoment durch die Massenträgheit der inneren Masse 3 bewirkt.

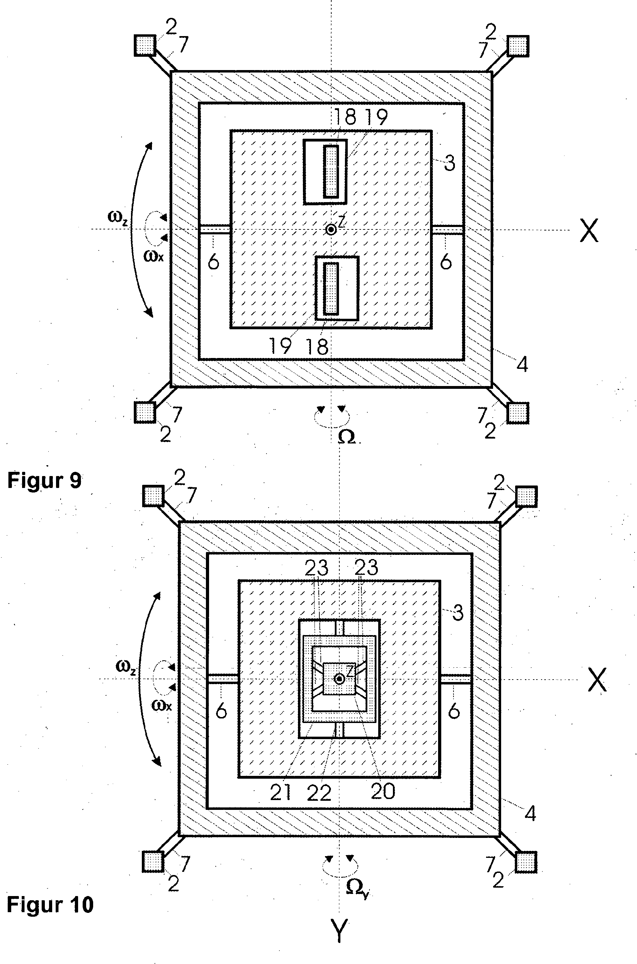

Eine andere Variante, in der die innere Masse wie in der Ausgestaltung der Figur 8 gezeigt nicht direkt über einen Anker am Substrat befestigt ist, ist in Figur 9 dargestellt. Das Rückstellmoment wird hier durch eine elektrostatische Kraft erzeugt. In dieser Ausführungsform sind Plattenelektroden 18 eingefügt. Die Masse 3 ist nicht mechanisch verankert und nur über Federelemente 6 mit dem äußeren Ring (der Antriebsmasse) verbunden. Eine Rückstellkraft kann durch Anlegen einer Spannung zwischen den Elementen 18 und 19 bzw. 3 erzeugt werden. Im günstigen Fall wird eine Wechselspannung mit gleicher Frequenz wie der der Antriebsschwingung und optimierter Phasenlage zwischen den Strukturen 8 und 3 angelegt. Typische Spannungsgrößen liegen im Bereich von einigen Millivolt bis einige Volt. Die Elektroden können wie erwähnt als Plattenelektroden ausgeführt werden. Es eignen sich aber insbesondere auch die in der Mikrosystemtechnik weit verbreiteten Fingerelektroden oder gestuften Fingerelektroden. Dabei können die Elektroden außenliegend oder aber auch zentral angeordnet werden.

Schließlich sei die Vielfalt der Möglichkeiten auch noch anhand einer Ausführungsform wie in **Figur 10** dargestellt, die eine stressentkoppelte Verankerung des Detektionselements zeigt. In diesem Beispiel ist die Detektionsmasse 3 nicht an einem zentralen Anker befestigt, sondern die Aufhängung ist so gestaltet, dass über die Federn 22 die Platte an einem inneren Befestigungsring 21 angebracht ist. Dieser Befestigungsring wiederum ist über eine stressentkoppelte mechanische Struktur 23 an einem Anker befestigt. Somit können Schichtstress oder thermisch bewirkter mechanischer Stress über die Struktur 23 ausgeglichen werden. Zusätzlich kann die Ringstruktur 21 so ausgelegt werden, dass Stress zusätzlich kompensiert werden kann. Durch die Stressentkoppelung wird das Gesamtsensorsystem weniger sensitiv gegenüber Temperaturdrift oder Prozessschwankungen.

Die vorliegende Erfindung kann wie erwähnt auch für lateral schwingende Drehratensensoren eingesetzt werden.

Es sollte daher klar sein, dass die Anordnung der verschiedenen Komponenten des Drehratensensors relativ frei wählbar sind, unter Beachtung der Tatsachen, dass dieser eine Antriebs- und Detektionsanordnung aufweist, deren Masselemente sich im Wesentlichen in x-y-Richtung flächig oberhalb der Substratoberfläche befindet, und dass die Antriebsmasse und die Detektionsmasse spiegel- und/oder drehsymmetrisch um den Anker angeordnet sind. Unter Spiegelsymmetrie ist dabei eine Spiegelsymmetrie mit einer x-z-Ebene oder y-z-Ebene als Spiegelebene zu verstehen, die durch den Anker hindurchgeht, wenn dieser zentrisch angeordnet ist, oder die durch das gedachte Zentrum der Ankerstruktur hindurchgeht, wenn diese aus mehreren Teilelementen besteht. Unter Drehsymmetrie ist dabei eine Symmetrie um eine z-Achse zu verstehen, die durch den Ankermittelpunkt hindurchgeht, wenn dieser zentrisch angeordnet ist, oder die durch das gedachte Zentrum der Ankerstruktur hindurchgeht, wenn diese aus mehreren Teilelementen besteht. Die Drehsymmetrie kann z.B. 2, 3, 4, 5, 6 oder 8strahlig sein, d.h. man kann bei einer Drehung um 360° um die z-Achse, geteilt durch 2, 3, 4,... zur Deckung der Strukturen gelangen. Alternativ kann die Drehsymmetrie natürlich auch rotationssymmetrisch sein.

**Patentansprüche**

1. Drehratensensor zur Detektion einer Drehung $\Omega$, um die der Sensor gedreht wird, wobei der Sensor ein Substrat und eine Antriebs- und Detektionsanordnung aufweist, die sich im Wesentlichen flächig in einer x-y-Ebene oberhalb der Substratoberfläche befindet, wobei die Antriebs- und Detektionsanordnung eine Antriebsmasse (4) und eine Detektionsmasse (3) aufweist, die in unterschiedlichen Abständen von einem Zentrum (Z) der Detektionsanordnung symmetrisch um dieses Zentrum herum angeordnet sind und deren Schwingungsmoden teilweise aufeinander übertragen werden können und teilweise entkoppelt sind, wobei die Drehung $\Omega$ dadurch detektiert wird, dass eine Verkippung der Detektionsmasse aus der Flächenebene der Antriebs- und Detektionsanordnung heraus detektiert wird, wobei diejenige der beiden Massen (3,4), die einen größeren Abstand zu dem genannten Zentrum aufweist, unter der Einwirkung von Corioliskraft aus der genannten Flächenebene heraus verkippen kann, **dadurch gekennzeichnet, dass** die genannte verkippbare Masse (3,4) über symmetrisch angeordnete Außenanker (7) mit dem Substrat derart verbunden ist, dass die Rückstellung der genannten Verkippung durch die Außenanker (7) unterstützt wird.

2. Drehratensensor nach Anspruch 1, umfassend

   (i) eine Antriebsmasse (4), die durch Anregung in eine translatorische Schwingung in y-Richtung oder eine rotatorische Schwingung um eine z-Achse versetzt werden kann, sowie
   (ii) eine Detektionsmasse (3), die sich bei Einwirkung einer um eine x-Achse erfolgenden Drehung $\Omega$ auf den Drehratensensor aus der x-y-Ebene heraus um eine y-Achse verkippen lässt.

3. Drehratensensor nach Anspruch 1 oder 2, worin die Antriebsmasse (4) und die Detektionsmasse (3) spiegel- und/oder drehsymmetrisch um das Zentrum (Z) angeordnet sind und eine der genannten Massen (3 bzw. 4) radial zumindest hinsichtlich ihres auf der Radiusachse gelegenen Schwerpunkts in einem größeren Abstand zum Anker angeordnet ist als die andere dieser Massen.

4. Drehratensensor nach einem der voranstehenden Ansprüche, worin sich die Detektionsmasse in einem größeren Abstand zu dem Zentrum (Z) befindet als die Antriebsmasse, wobei Verbindungselemente (5, 6) vorhanden sind, die die Schwingung der Antriebsmasse in x-y-Ebene auf die Detektionsmasse übertragen, aber verhindern, dass sich das Antriebselement bei Einwirkung der Drehung $\Omega$ auf den Sensor aus der x-y-Ebene heraus verkippen lässt, oder diese Verkippung vermindern.

5. Drehratensensor nach einem der Ansprüche 1 bis 3, worin sich die Antriebsmasse in einem größeren Abstand zu dem Zentrum (Z) befindet als die Detektionsmasse, wobei Verbindungselemente (5, 6) vorhanden sind, die ein Verkippen des Antriebselements bei Einwirken der Drehung $\Omega$ auf den Sensor zulassen, aber eine Übertragung der Schwingung des Antriebselements in x-y-Ebene auf das Detektionselement verhindern oder vermindern.

6. Drehratensensor nach einem der voranstehenden Ansprüche und insbesondere nach Anspruch 5, worin ein Mittel zur Erzeugung eines Rückstellmoments für die näher am Zentrum liegende Masse vorgesehen ist.

7. Drehratensensor nach Anspruch 6, worin das Mittel zur Erzeugung eines Rückstellmoments ein elektrostatisches Mittel ist.

8. Drehratensensor nach Anspruch 7, worin das Mittel zur Erzeugung eines Rückstellmoments durch gegensinnig geladene Elektroden gebildet wird, die am Substrat und an der näher am Zentrum befindlichen Masse angebracht sind.

9. Drehratensensor nach einem der voranstehenden Ansprüche, **dadurch gekennzeichnet, dass** diejenige der genannten Massen (3,4), die einen größeren Abstand zum Anker besitzt, über mindestens zwei Verbindungsmittel (7) mit dem Substrat (2) verbunden ist, derart, dass die Rückstellung der Verkippung aus der x-y-Ebene heraus durch die Verbindungsmittel unterstützt wird.

10. Drehratensensor nach einem der voranstehenden Ansprüche, worin die Antriebsmasse eine rotatorische Schwingung ausführt.

11. Drehratensensor nach einem der voranstehenden Ansprüche, worin die Antriebsmasse und/oder die Detektionsmasse entweder die Gestalt eines Rahmens besitzen oder aus zwei oder mehr Teilelementen bestehen, die untereinander verbunden sind oder die untereinander nicht verbunden sind.

12. Drehratensensor nach einem der Ansprüche 1 bis 3, 5, 6 und 9 bis 11, worin Verbindungselemente (5) zwischen dem zentralen Anker und der Detektionsmasse vorhanden und so ausgebildet sind, dass eine Rotation der Detektionsmasse in x-y-Ebene im Wesentlichen unterbunden ist.

13. Drehratensensor nach Anspruch 12, **dadurch gekennzeichnet, dass** die Verbindungselemente (5) Federn sind, deren Federkonstante $k_{\Phi Z}$ im Bereich von 100 bis 5000 x $10^{-6}$ Nm/rad, vorzugsweise bis 1000 x $10^{-6}$ Nm/rad liegt.

14. Drehratensensor nach Anspruch 12 oder 13, **dadurch gekennzeichnet, dass** die Verbindungselemente (5) Federn sind, deren Federkonstante $k_{\Phi Z}$ um mindestens den Faktor 10 höher ist als die Federkonstanten $k_{\Phi X}$ und $k_{\Phi Y}$.

15. Drehratensensor nach einem der Ansprüche 1 bis 3 und 5 bis 11, **dadurch gekennzeichnet, dass** Verbindungselemente (6) zwischen der Antriebsmasse (4) und der Detektionsmasse (3) vorhanden und so ausgebildet sind, dass die Schwingung der Antriebsmasse in x-y-Richtung nicht oder nur teilweise auf die Detektionsmasse übertragen wird.

16. Drehratensensor nach Anspruch 15, **dadurch gekennzeichnet, dass** die Verbindungselemente (6) Federn sind, deren Federkonstanten $k_{\Phi X}$, $k_{\Phi Y}$ und $k_{\Phi Z}$ jeweils im Bereich von etwa 1 bis etwa 1000 x $10^{-6}$ Nm/rad und vorzugsweise von etwa 5 bis etwa 50 x $10^{-6}$ Nm/rad liegen.

17. Drehratensensor nach Anspruch 1, **dadurch gekennzeichnet, dass** die Außenanker (7) Federn sind, deren Federkonstanten $k_{\Phi X}$, $k_{\Phi Y}$ und $k_{\Phi Z}$ jeweils im Bereich von etwa 0,1 bis etwa 1000 x $10^{-6}$ Nm/rad und vorzugsweise im Bereich von etwa 0,5 bis etwa 10 x $10^{-6}$ Nm/rad liegen.

**Claims**

1. Rotation rate sensor for sensing a rotation $\Omega$ by which the sensor is rotated, wherein the sensor comprises a substrate and a driving and sensing arrangement that is located substantially flat in an x-y plane above the substrate surface, wherein the driving and sensing arrangement comprises a drive mass (4) and a sense mass (3) that are arranged at different spacings from a center (Z) of the sensing arrangement symmetrically about said center and whose oscillation modes are partially transmittable onto one another and are partially decoupled, wherein the rotation $\Omega$ is sensed in that a tilting of the sense mass out of the surface plane of the driving and sensing arrangement is sensed, wherein that of the two masses (3, 4) that has a greater spacing to the center can be tilted under the effect of Coriolis force out of the surface plane, **characterized in that** the said mass (3, 4) that can be tilted is connected to the substrate by symmetrically arranged external anchors (7) such that the restoring action for the tilting action is assisted by the external anchors (7).

2. Rotation rate sensor according to claim 1, comprising

   (i) a drive mass (4) that by excitation can be caused to perform a translatory oscillation in y direction or a rotatory oscillation about a z axis, as well as
   (ii) a sense mass (3) that can be tilted out of the x-y plane about a y axis upon action onto the rotation rate sensor of a rotation $\Omega$ occurring about an X axis.

3. Rotation rate sensor according to claim 1 or 2, wherein the drive mass (4) and the sense mass (3) are arranged with mirror-symmetry and/or rotational symmetry about the center (Z) and one of said masses (3 or 4) is arranged, at least with respect to its center of gravity that is located on the radius axis, radially at a greater spacing relative to the anchor than the other one of said masses.

4. Rotation rate sensor according to any of the preceding claims, wherein the sense mass is positioned at a greater spacing to the center (Z) than the drive mass, wherein connecting elements (5, 6) are present that transmit the oscillation of the drive mass in the x-y plane onto the sense mass but prevent that the drive element, upon action of the rotation $\Omega$ onto the sensor, can be tilted out of the x-y plane or reduce this tilting action.

5. Rotation rate sensor according to any of claims 1 to 3, wherein the drive mass is positioned at a greater spacing to the center (Z) than the sense mass, wherein connecting elements (5, 6) are present that allow a tilting action of the drive element upon action of the rotation $\Omega$ on the sensor but prevent or reduce a transmission of the oscillation of the drive element in the x-y plane onto the sense element.

6. Rotation rate sensor according to any of the preceding claims and in particular according to claim 5, wherein a means for generating a restoring moment for the mass closer to the center is provided.

7. Rotation rate sensor according to claim 6, wherein the means for generating a restoring moment is an electrostatic means.

8. Rotation rate sensor according to claim 7, wherein the means for generating a restoring moment is formed by oppositely charged electrodes that are mounted to the substrate and to the mass that is closer to the center.

9. Rotation rate sensor according to any of the preceding claims, **characterized in that** that one of said masses (3, 4) that has a greater spacing to the anchor, is connected by means of at least two connecting means (7) to the substrate (2) in such a way that the restoring action for the tilting action out of the x-y plane is assisted by the connecting means.

10. Rotation rate sensor according to any of the preceding claims, wherein the drive mass carries out a rotatory oscillation.

11. Rotation rate sensor according to any of the preceding claims, wherein the drive mass and/or the sense mass either have the configuration of a frame or are comprised of two or more partial elements that are connected to one another or that are not connected to one another.

12. Rotation rate sensor according to any of claims 1 to 3, 5, 6, and 9 to 11, wherein connecting elements (5) between the central anchor and the sense mass are present and designed such that a rotation of the sense mass in the x-y plane is substantially prevented.

13. Rotation rate sensor according to claim 12, **characterized in that** the connecting elements (5) are springs whose spring constant $k_{\Phi Z}$ is in the range of 100 to 5000 x $10^{-6}$ Nm/rad, preferably up to 1000 x $10^{-6}$ Nm/rad.

14. Rotation rate sensor according to claim 12 or 13, **characterized in that** the connecting elements (5) are springs whose spring constant $k_{\Phi Z}$ is higher by at least the factor 10 than the spring constants $k_{\Phi X}$ and $k_{\Phi Y}$.

15. Rotation rate sensor according to any of the claims 1 to 3 and 5 to 11, **characterized in that** connecting elements (6) are present between the drive mass (4) and the sense mass (3) and are configured such that the oscillation of the drive mass in the x-y direction is not transmitted, or only partially transmitted, onto the sense mass.

16. Rotation rate sensor according to claim 15, **characterized in that** the connecting elements (6) are springs whose spring constants $k_{\Phi X}$, $k_{\Phi Y}$ and $k_{\Phi Z}$ each are in the range of approximately 1 to approximately 1000 x $10^{-6}$ Nm/rad and preferably from approximately 5 to approximately 50 x $10^{-6}$ Nm/rad.

17. Rotation rate sensor according to claim 1, **characterized in that** the external anchors (7) are springs whose spring constants $k_{\Phi X}$, $k_{\Phi Y}$ and $k_{\Phi Z}$ each are in the range of approximately 0.1 to approximately 1000 x $10^{-6}$ Nm/rad and preferably in the range of approximately 0.5 to approximately 10 x $10^{-6}$ Nm/rad.

**Revendications**

1. Capteur de taux de rotation pour détecter une rotation $\Omega$, dont le capteur est tourné, sachant que le capteur présente un substrat et un dispositif d'entraînement et de détection, qui se trouve essentiellement en surface dans un plan x-y au-dessus de la surface du substrat, le dispositif d'entraînement et de détection présentant une masse d'entraînement (4) et une masse de détection (3), qui sont disposées symétriquement tout autour d'un centre (Z) du dispositif de détection à des distances différentes de ce centre et dont les modes de vibration peuvent être pour partie transmis l'un sur l'autre et sont pour partie désaccouplés, et la rotation $\Omega$ est détectée en détectant un basculement de la masse de détection hors du plan surfacique du dispositif d'entraînement et de détection, dans lequel celle des deux masses (3, 4) qui présente une plus grande distance dudit centre peut basculer hors dudit plan surfacique sous l'action de la force de Coriolis, **caractérisé en ce que** ladite masse basculante (3, 4) est reliée au substrat au moyen d'ancrages extérieurs (7) disposés symétriquement, de telle manière que le rappel dudit basculement est assisté par les ancrages extérieurs (7).

2. Capteur de taux de rotation selon la revendication 1, comprenant:

   (i) une masse d'entraînement (4), qui peut être déplacée par excitation en une vibration de translation dans la direction y ou en une vibration de rotation autour d'un axe z, ainsi que
   (ii) une masse de détection (3), qui peut être basculée hors du plan x-y autour d'un axe y par l'action d'une rotation $\Omega$ produite autour d'un axe x appliquée au capteur de taux de rotation.

3. Capteur de taux de rotation selon la revendication 1 ou 2, dans lequel la masse d'entraînement (4) et la masse de détection (3) sont disposées de façon symétrique par réflexion et/ou par rotation autour du centre (Z) et une desdits masses (3 ou 4) est disposée radialement, au moins en ce qui concerne son centre de gravité situé sur l'axe du rayon, à une plus grande distance de l'ancrage que l'autre de ces masses.

4. Capteur de taux de rotation selon l'une quelconque des revendications précédentes, dans lequel la masse de détection se trouve à une plus grande distance du centre (Z) que la masse d'entraînement, dans lequel il se trouve des moyens de liaison (5, 6), qui transmettent la vibration de la masse d'entraînement dans le plan x-y à la masse de détection, mais qui empêchent que le moyen d'entraînement bascule hors du plan x-y sous l'action de la rotation $\Omega$ sur le capteur, ou qui diminuent ce basculement.

5. Capteur de taux de rotation selon l'une quelconque des revendications 1 à 3, dans lequel la masse d'entraînement se trouve à une plus grande distance du centre (Z) que la masse de détection, dans lequel il se trouve des moyens de liaison (5, 6), qui permettent un basculement du moyen d'entraînement sous l'action de la rotation $\Omega$ sur le capteur, mais qui empêchent ou diminuent une transmission dans le plan x-y de la vibration du moyen d'entraînement au moyen de détection.

6. Capteur de taux de rotation selon l'une quelconque des revendications précédentes et en particulier selon la revendication 5, dans lequel il est prévu un moyen pour produire un couple de rappel pour la masse située plus près du centre.

7. Capteur de taux de rotation selon la revendication 6, dans lequel le moyen pour produire un couple de rappel est un moyen électrostatique.

8. Capteur de taux de rotation selon la revendication 7, dans lequel le moyen pour produire un couple de rappel est formé par des électrodes chargées à contre-sens, qui sont appliquées au substrat et à la masse située plus près du centre.

9. Capteur de taux de rotation selon l'une quelconque des revendications précédentes, **caractérisé en ce que** celle desdites masses (3, 4), qui présente une plus grande distance par rapport à l'ancrage, est reliée au substrat (2) par au moins deux moyens de liaison (7), de telle manière que le rappel du basculement hors du plan x-y soit assisté par les moyens de liaison.

10. Capteur de taux de rotation selon l'une quelconque des revendications précédentes, dans lequel la masse d'entraînement effectue une vibration de rotation.

11. Capteur de taux de rotation selon l'une quelconque des revendications précédentes, dans lequel la masse d'entraînement et/ou la masse de détection ont soit la forme d'un cadre soit se composent de deux ou plusieurs éléments partiels, qui sont reliés les uns aux autres ou qui ne sont pas reliés les uns aux autres.

12. Capteur de taux de rotation selon l'une quelconque des revendications 1 à 3, 5, 6 et 9 à 11, dans lequel des moyens de liaison (5) se trouvent entre l'ancrage central et la masse de détection et sont configurés de telle manière qu'une rotation de la masse de détection dans le plan x-y soit essentiellement empêchée.

13. Capteur de taux de rotation selon la revendication 12, **caractérisé en ce que** les moyens de liaison (5) sont des ressorts, dont la constante de rappel $k_{\Phi Z}$ se situe dans la plage de 100 à 5000 x $10^{-6}$ Nm/rad, de préférence jusque 1000 x $10^{-6}$ Nm/rad.

14. Capteur de taux de rotation selon la revendication 12 ou 13, **caractérisé en ce que** les moyens de liaison (5) sont des ressorts, dont la constante de rappel $k_{\Phi Z}$ est plus élevée au moins d'un facteur 10 que les constantes de rappel $k_{\Phi X}$ et $k_{\Phi Y}$.

15. Capteur de taux de rotation selon l'une quelconque des revendications 1 à 3 et 5 à 11, **caractérisé en ce que** des moyens de liaison (6) se trouvent entre la masse d'entraînement (4) et la masse de détection (3) et sont configurés de telle manière que la vibration de la masse d'entraînement dans la direction x-y ne soit pas ou seulement partiellement transmise à la masse de détection.

16. Capteur de taux de rotation selon la revendication 15, **caractérisé en ce que** les moyens de liaison (6) sont des ressorts, dont les constantes de rappel $k_{\Phi X}$, $k_{\Phi Y}$ et $k_{\Phi Z}$ se situent respectivement dans la plage d'environ 1 à environ 1000 x $10^{-6}$ Nm/rad et de préférence d'environ 5 à environ 50 x $10^{-6}$ Nm/rad.

17. Capteur de taux de rotation selon la revendication 1, **caractérisé en ce que** les ancrages extérieurs (7) sont des ressorts, dont les constantes de rappel $k_{\Phi X}$, $k_{\Phi Y}$ et $k_{\Phi Z}$ se situent respectivement dans la plage d'environ 0,1 à environ 1000 x $10^{-6}$ Nm/rad et de préférence dans la plage d'environ 0,5 à environ 10 x $10^{-6}$ Nm/rad.

**Figur 1**

**Figur 2**

**Figur 3**

**Figur 4**

ΔC =0

ΔC <> 0

16

14

15

13

16

14

15

13

## Figur 5

A)

Strukturmaterial

Opferschicht

Substrat

B)

Strukturmaterial

Opferschicht

Substrat

C)

Freie Struktur

Substrat

## Figur 6

Figur 7

Figur 8

**Figur 9**

**Figur 10**

# EP 2 132 528 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19641284 C1
- US 4598585 A
- US 5203208 A
- US 5535902 A
- US 5650568 A
- US 5635640 A
- US 6505511 B
- US 5895850 A
- US 6062082 A
- EP 0906557 A
- WO 216871 A
- US 5955668 A
- EP 0906557 B1